**Europäisches Patentamt**

**European Patent Office**

**Office européen des brevets**

(19)

(11) Veröffentlichungsnummer: **0 123 790**
A2

# (12) EUROPÄISCHE PATENTANMELDUNG

(21) Anmeldenummer: **84100809.7**

(22) Anmeldetag: **26.01.84**

(51) Int. Cl.³: **B 01 F 7/22,** B 01 F 15/00, B 01 F 3/12

(30) Priorität: **30.04.83 DE 3315801**

(43) Veröffentlichungstag der Anmeldung: **07.11.84** **Patentblatt 84/45**

(84) Benannte Vertragsstaaten: **AT BE CH DE FR GB IT LI LU NL SE**

(71) Anmelder: **Schaffer & Moser AG Maschinen- und Apparatebau, Bahnhofstrasse, CH-6207 Nottwil (CH)**

(72) Erfinder: **Schürch, Ernst, Obergrundstrasse 3, CH-6000 Luzern (CH)**

(74) Vertreter: **Schmitt, Hans, Dipl.-Ing. et al, Dreikönigstrasse 13, D-7800 Freiburg (DE)**

(54) **Rührvorrichtung.**

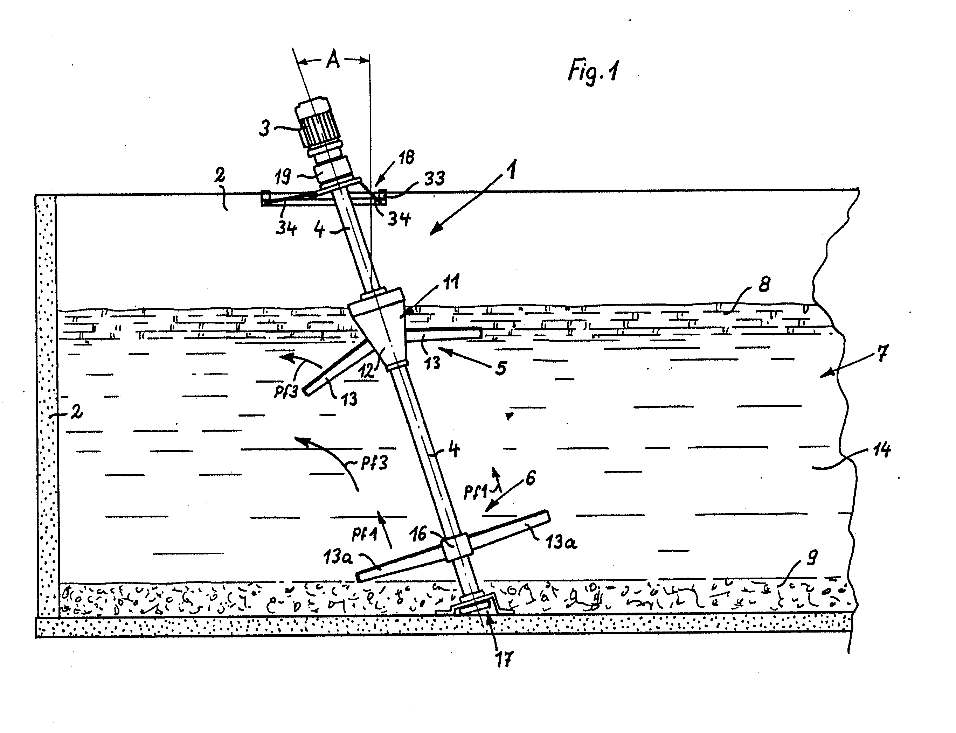

(57) Eine Rührvorrichtung zum Durchmischen von Flüssigkeiten, insbesondere von in einem Behälter befindlicher Gülle, weist an ihrem oberen Ende einen Antriebsmotor für einen mit Rührern besetzten, in die Gülle od.dgl. ragenden Rührstange (4) auf. Dabei sind wenigstens zwei etwa übereinanderliegende Rührer vorgesehen, wobei einer im bodennahen und der andere im oberflächennahen Bereich angeordnet sind. Die Rührvorrichtung ist mit ihrer Rührstange vorzugsweise schrägstehend angeordnet, so daß neben einer guten Durchmischung und einem Abbau einer Schwimmdecke und einer Sedimentschicht auch eine resultierende Umlaufströmung erzeugt werden kann. Wenigstens einer der Rührer weist dabei eine bezüglich der Rührstange etwa axiale Förderrichtung auf. Bei Ausbildung eines Rührers als propellerartiges Förderelement sind dessen Rührflügel (13, 13a) mit einer tragflächenartigen Profilierung versehen. Man erhält dadurch bei geringem Antriebswiderstand eine hohe Förderleistung (Fig. 1).

EP 0 123 790 A2

**PATENTANWÄLTE**

**DIPL.-ING. H. SCHMITT**
**DIPL.-ING. W. MAUCHER**

78 FREIBURG I. BR.   **25. Jan. 1984**
DREIKÖNIGSTR. 13
TELEFON:   **0123790**

Firma
Schaffer + Moser AG
Maschinen- und Apparatebau
CH-6207 Nottwil

UNSERE AKTE - BITTE STETS ANGEBEN!

E 83 545 MR

Rührvorrichtung

Die Erfindung betrifft eine Rührvorrichtung zum Durchmischen von Flüssigkeiten mit Schwimm- und Sinkbestandteilen, insbesondere von in einem Behälter befindlicher Gülle od. dgl., mit einem Antriebsmotor sowie einer mit Rührern besetzten, in die Gülle od. dgl. ragenden Rührstange od. dgl.

Zum Durchmischen von Gülle sind bereits Rührvorrichtungen bekannt, durch die die sonst bei ruhender Lagerung stattfindenden Feststoffausscheidungen in Schwimm- und Sinkschichten vermieden werden sollen.
In der Praxis hat es sich gezeigt, daß diese Rührwerke hinsichtlich einer guten Durchmischung der Gülle od.dgl. und auch hinsichtlich des Energieverbrauches verbesserungswürdig sind.
Aufgabe der vorliegenden Erfindung ist es daher, eine Rührvorrichtung der eingangs erwähnten Art zu schaffen, die eine besonders gute Durchmischung bei niedrigem Energiebedarf sowie auch eine Anpassung an die jeweiligen Gegebenheiten ermöglicht.

Mr/H

/2

Zur Lösung dieser Aufgabe wird erfindungsgemäß insbesondere vorgeschlagen, daß in wenigstens zwei in etwa übereinander liegenden Ebenen Rührer od. dgl. an der Rührstange angebracht sind und daß zumindest einer der Rührer eine bezüglich der Rührstange etwa axiale Förderrichtung aufweist. Durch die Ausbildung mit wenigstens in zwei Ebenen liegenden Rührern od. dgl. wird in erwünschter Weise eine sowohl die Schwimmdecke als auch die Sinkschicht auflösende und umfördernde Strömung erzeugt.

Nach einem weiteren Merkmal der Erfindung ist die Vorrichtung mit ihrer Rührstange schräg, vorzugsweise in einem Winkel zur Senkrechten von bis zu etwa 45°, vorzugsweise mit einem Schrägwinkel von etwa 30° angeordnet, wobei eine durch die Längsachse der Vorrichtung laufende, senkrechte Ebene insbesondere etwa in Richtung einer gewünschten Strömung orientiert ist. Durch die Schrägstellung der Rührvorrichtung wird neben der guten Durchmischung der Güllenbestandteile auch eine Umförderung der Gülle mit einer entsprechenden Durchströmung des Güllenvorrates erreicht, so daß nicht nur im Nahbereich der Rührvorrichtung eine Durchmischung, sondern durch das Umströmen auch ein Zufördern von weiter entfernt in dem Behälter befindlicher Gülle bewirkt wird. Dadurch ist auch sichergestellt, daß die Gülle nicht nur bereichsweise, sondern insgesamt erfaßt wird.

Eine Weiterbildung der Erfindung sieht vor, daß die Höhe des oberen Rührers od. dgl. in Anpassung an den jeweiligen Füllstand des Güllen-Behälters verstellbar ist, und daß dazu vorzugsweise ein mit dem Rührer od. dgl. verbundener, auf der Rührstange drehfest und längs verschieblich angeordneter Schwimmer vorgesehen ist. Einerseits läßt sich diese Ausführung konstruktiv einfach realisieren und ist darüber hinaus auch betriebssicher.

Durch die Anordnung des Rührers etwa innerhalb der Schwimmschicht wird diese während des Betriebes auch gut abgebaut und mit den dünnflüssigeren Bestandteilen der Gülle in erwünschter Weise durchmischt.

Vorteilhafterweise weisen der bzw. die Rührflügel eine tragflächenartige Profilierung, vorzugsweise eine halb-symmetrische, gegebenenfalls eine symmetrische Profilie-rung auf, wobei sie in Arbeitsstellung mit einem Anstellwinkel von etwa 2 bis 12$^{\circ}$, vorzugsweise etwa 4$^{\circ}$ montiert sind.

Solche Rührflügel ergeben eine gute Förderleistung und weisen insbesondere durch ihre Profilierung sowie auch durch den gewählten Anstellwinkel einen vergleichsweise geringen Antriebswiderstand auf, so daß man bei hoher Durchmischungs-Effektivität mit einer vergleichsweise geringen Antriebsleistung auskommt.

Eine Ausführungsform der Erfindung sieht vor, daß im unteren Bereich wenigstens ein Rührer als propellerartiges Förderelement und der bzw. die oberen Rührer als Wirbler bzw. Zerreißer ausgebildet sind, wobei die Förderrichtung vorzugsweise etwa nach oben gerichtet ist. Diese Anordnung ist insbesondere bei stärkerer Sedimentation vorteilhaft, weil durch die Förderrichtung nach oben das Sediment vom Boden abgehoben und mit den anderen Güllenschichten vermischt wird. Im oberen Bereich angeordnete Wirbler bzw. Zerreißer sorgen gleichzeitig dafür, daß die Schwimmdecke abgebaut und ebenfalls mit den anderen Güllenschichten, insbesondere der Dünnflüssigkeitsschicht vermischt wird.

Eine andere Ausführungsform sieht vor, daß sich sowohl am oberen als auch am unteren Endbereich der Rührstange od. dgl. als propellerartige Förderelemente ausgebildete Rührer befinden, wobei die Förderrichtung vorzugsweise umkehrbar ist. Diese Ausführungsform ist besonders dann vorteilhaft, wenn sich bezüglich der Schwimm- und Sinkbestandteile wechselnd unterschiedliche Verhältnisse einstellen. Bildet sich beispielsweise verstärkt eine Schwimmdecke aus, so wird die Förderrichtung zum Abbauen dieser Schwimmdecke nach unten vorgesehen, während bei einer sich vorwiegend ausbildenden Sedimentschicht die Förderrichtung nach oben vorgesehen ist. Im letzteren Falle wirkt das obere Förderelement auch als Wirbler bzw. Zerreißer.

Zweckmäßigerweise ist bei dem Schwimmer, insbesondere bei Bestückung mit Rührflügeln, eine Arretiervorrichtung zum Festlegen des Schwimmers in axialer Richtung an der Rührstange vorgesehen. Dadurch wird verhindert, daß sich der während des Betriebes einstellende axiale Vortrieb der Rührflügel auf die Schwimmhöhe des Schwimmers auswirkt. Zweckmäßigerweise weist dazu die Arretiervorrichtung zur drehabhängigen Betätigung ein oder mehrere ein- oder ausrückbare, an der Rührstange angreifende Klemmelemente auf, die mit in die Flüssigkeit ragenden Paddeln od.dgl. verbunden sind. Dadurch wirn in besonders vorteilhafter Weise erreicht, daß sich einerseits der Schwimmer in erwünschter Weise an die Füllhöhe im Behälter anpassen kann, andererseits jedoch während des Betriebes durch den Vortrieb der Rührflügel seine Höhenlage ändert.

Nach einer abgewandelten Ausführungsform ist vorgesehen, daß beide propellerartige, am oberen und unteren Endbereich der Rührstange angeordneten Rührer od. dgl., vorzugsweise bei gleicher Drehrichtung entgegengesetzte Anstellwinkel und aufeinander zugerichtete Förderrichtungen aufweisen, und daß gegebenenfalls die Fördermenge der gegeneinander fördernden Rührer od. dgl. unterschied-

0123790

lich ist. Durch die aufeinander zugerichteten Förderrichtungen der beiden Rührer od. dgl. erzielt man einerseits eine Förderung der boden- bzw. oberflächenseitigen festeren Bestandteile in die mittlere Dünnflüssigkeitsschicht und andererseits wird durch die unterschiedlichen Fördermengen bzw. auch durch die vorzugsweise vorgesehene Schrägstellung der Vorrichtung eine etwa radiale Strömungsbewegung mit überlagert. Dadurch ergibt sich insgesamt eine besonders günstige Durchmischung.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt:

Fig. 1    eine in Betriebsstellung befindliche Rührvorrichtung,

Fig. 2    eine Stirnseitenansicht eines im Schnitt dargestellten Rührflügels mit Befestigungsflansch,

Fig. 3    eine etwa Fig. 1 entsprechende Ansicht einer in einem leeren Behälter angeordneten Rührvorrichtung,

Fig. 4    eine Aufsicht eines Behälters mit darin angeordneter Rührvorrichtung,

Fig. 5    eine Teilseitenansicht einer etwas abgewandelt ausgebildeten Rührvorrichtung,

Fig. 6    eine zum Teil aufgebrochen dargestellte Seitenansicht im Bereich eines Schwimmers,

Fig. 7    eine Aufsicht eines Schwimmermitnehmeers mit darin befindlicher Rührstange und

Fig. 8    eine Querschnittsdarstellung des unteren Endes
eines Schwimmers mit dort angeordneter Arretiervorrichtung.

Eine Rührvorrichtung 1 ist in einem Behälter 2, insbesondere einem Güllen-Silo installiert. Die Rührvorrichtung 1 weist im wesentlichen einen Antriebsmotor 3 mit
Getriebe 19, eine von diesem angetriebene Rührstange 4
sowie an dieser angebrachte Rührer 5 auf. Die Rührer befinden sich in Arbeitsstellung innerhalb der im Güllen-
Silo 2 befindlichen Gülle 7. Bei ruhender Lagerung, die
in Fig. 1 zur Verdeutlichung dargestellt ist, findet eine
Feststoffausscheidung statt, wobei sich oberflächenseitig
eine Schwimmschicht 8, z. B. mit Strohbestandteilen u.
dgl. Flotaten und am Boden eine Sinkschicht 9 z. B. mit
Sandbestandteilen od. dgl. bildet. Diese Feststoffausscheidung wird durch die erfindungsgemäße Rührvorrichtung 1 vermieden bzw. während des Betriebes durch eine
praktisch vollständige Durchmischung der Güllenbestandteile wieder rückgängig gemacht.

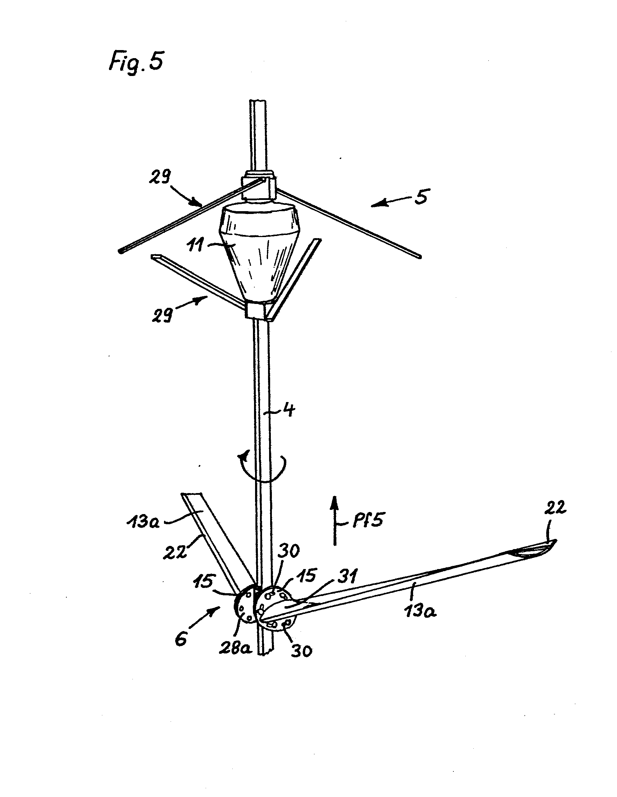

Für diese Durchmischung sind im Ausführungsbeispiel gemäß Fig. 1, 3 und 4 oberflächenseitige sowie bodenseitige Rührer jeweils propellerartig ausgebildet. Das Rührgestänge 4 ist dabei schräg, z. B. einem Winkel A von
etwa 30$^O$, gegebenenfalls bis zu einem Winkel A von 45$^O$
schräggestellt, wodurch sich auch noch eine etwa radiale
Förderkomponente überlagert. Die Schrägstellung ist dabei
in Bezug z. B. auf einen runden Behälter 2 (Fig. 4) so
vorgesehen, daß eine durch die Längsachse der Vorrichtung 1 verlaufende, vertikale Ebene etwa in Richtung einer gewünschten Strömung orientiert ist, wie dies in Fig. 4 durch den Pfeil Pf 4 angedeutet ist.

Die Förderrichtungen der beiden Rührer 5 und 6 in axialer Richtung ist durch die Pfeile Pf 1 bei Förderung nach oben angedeutet, währenddem die überlagerte Radialförderbewegung in Bezug auf die Rührvorrichtung durch die Pfeile Pf 3 gekennzeichnet ist. Die Rührvorrichtung 1 ist in diesem Ausführungsbeispiel im wandnahen Bereich des Behälters 2 angeordnet, wobei die Schrägstellung der Rührstange 4 etwa parallel zu dem näheren, benachbarten Behälter-Wandabschnitt vorgesehen ist.

Der obere Rührer 5 befindet sich in Arbeitsstellung etwa im Oberflächenbereich der Füllenfüllung und dabei insbesondere innerhalb der Schwimmdecke 8. Dadurch wird diese während des Betriebes gut erfaßt und mit den übrigen Güllenbestandteilen vermischt. Um diese Lage des oberen Rührers auch bei sich verändernder Füllhöhe des Behälters 2 beizubehalten, ist dieser Rührer 5 mit einem auf der Rührstange 4 drehfest und längsverschieblich angeordnetem Schwimmer 11 verbunden. Dadurch erfolgt in erwünschter Weise praktisch automatisch ein selbsttätiges Höhenver-stellen des oberen Rührers 5 in Anpassung an die Füllhöhe. Im Ausführungsbeispiel bildet der Schwimmer 11 für den oberen Rührer 5 eine Nabe 12. Zur drehfesten Verbindung der Rührstange 4 mit der Nabe 12 bzw. dem Schwimmer 11 bei gleichzeitiger Längsverschieblichkeit weist die Rührstange 4 vorzugsweise durchgehend eine Profilierung auf und ist im Ausführungsbeispiel als Vierkant ausgebildet. Die Durchgangsöffnung in der Nabe 12 für die Rührstange 4 weist innenseitig einen profilierten, insbesondere vierkantigen Abschnitt auf. Dieser Abschnitt ist durch eine Mitnehmerscheibe 23 gebildet, die sich vorzugsweise am oberen Ende des Schwimmers 11 befindet (Fig.

/8

6 und 7). Im übrigen weist der Schwimmer 1 als "Innenskelett" ein vertikales Rohr 24 mit einer runden Innenhöhlung auf. Durch diese Ausbildung ist zwischen der vierkantigen Ausbildung der Rührstange 4 und der Innenwandung der Innenhöhlung des Rohres 24 entsprechender Platz vorhanden, durch den ein Verklemmen des Schwimmers 11 insbesondere durch sich festsetzenden Schmutz u. dgl. vermieden wird. Fig. 7 läßt gut erkennen, daß auch die Mitnehmerscheibe 23 im wesentlichen nur im Eckeingriffsbereich der Rührstange 4 eine entsprechend angepaßte Mitnehmerprofilierung aufweist und im übrigen Bereich Ausnehmungen 25 hat, die ebenfalls dazu beitragen, daß die Längsverschiebbarkeit des Schwimmers 11 auch bei stärkerer Verschmutzung erhalten bleibt und somit eine hohe Betriebssicherheit gegeben ist.

Quer zur etwa vertikalen Längserstreckung des Schwimmers 11 ist innerhalb von diesem ein Querträger 26 angeordnet, der vorzugsweise von dem vertikalen Rohr 24 zentral durchsetzt und dort mit diesem verbunden ist. An den freien Enden des Querträgers 26 im Mantelbereich 27 des Schwimmers 11 sind Anschlußflansche 28 zum Anschließen von Rührflügeln 13 mit etwa entsprechenden Befestigungsflanschen 15 vorgesehen.

Der Innenraum des Schwimmers ist vorzugsweise ausgeschäumt und durch eine Kunststoffschicht, z. B. eine Polyesterschicht umgrenzt.

Der obere Rührer 5 bildet mit seinen Rührflügeln 13 im Ausführungsbeispiel eine etwa kegelförmige, bezüglich der Rührstange 4 nach unten weisende Rotationsmantelebene, wobei eine Mantellinie vorzugsweise etwa parallel zur Flüssigkeitsoberfläche bzw. zur Schwimmschicht 8 verläuft. Die etwas nach unten vorgesehene Abwinklung der Rührflügel 13 ist dabei insbesondere in Anpassung an die Schrägstellung der gesamten Rührvorrichtung 1 vorgesehen.

/9

Durch die Schrägstellung der Rührflügel 13 ist ein vergrößerter, nahe an der Schwimmschicht liegender Arbeits- bzw. bei abwärts gerichteter Förderung ein entsprechender Saugbereich geschaffen. Gleichzeitig wird vermieden, daß die während der Rotation der Oberfläche am nächsten kommende Seite zu weit in die Schwimmschicht hineingelangt und gegebenenfalls auch die Oberseite in unerwünschter Weise aufspritzen läßt. Es ist somit bei sehr intensiver Durchmischung der Gülle ein vergleichsweise ruhiger Flüssigkeitsspiegel vorhanden.

Erwähnt sei noch, daß neben der dargestellten Ausführungsform mit abgewinkelten Rührflügeln 13 auch eine Anordnung mit in einer Ebene liegenden Rührflügeln 13 in Frage kommt, wobei dann allerdings zweckmäßigerweise der Rührer insgesamt etwas tiefer angeordnet ist.

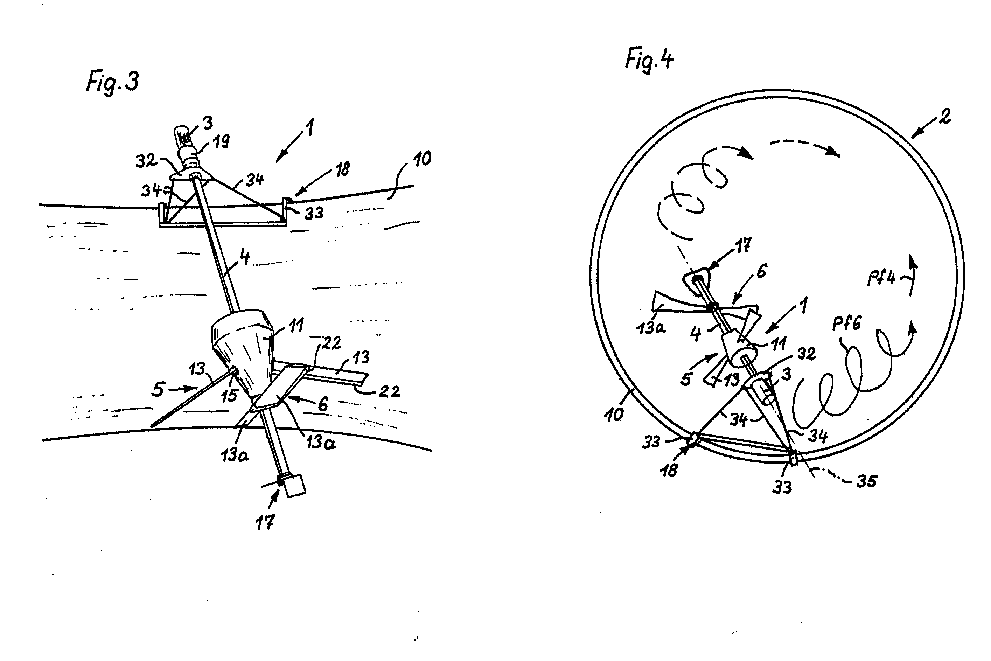

Der bodenseitige Rührer 6 befindet sich in Arbeitsstellung etwas oberhalb einer Sinkschicht 9 und ist dort fest mit der Rührstange 4 verbunden. Im Ausführungsbeispiel gemäß Fig. 1 und 3 weist der Rührer 6 etwa in einer Ebene angeordnete Rührflügel 13 a auf. Gegebenenfalls könnte auch bei diesem Rührer 6 eine abgewinkelte Anordnung der Rührflügel 13 a, wie in Fig. 5 gezeigt, vorgesehen sein. Auch dabei könnte die Abwinklung etwa in Anpassung an die Schrägstellung der gesamten Rührvorrichtung 1 vorgesehen sein. Insbesondere ist dies dann bei Rührflügeln 13 a mit besonders großer Spannweite vorgesehen.

Insgesamt erzeugen die Rührer 5 und 6 durch ihre Ausbildung bzw. Anordnung in dem in der Regel runden Güllen-Silo 2 eine Rotationsbewegung, der als Folge eine Radialbewegung überlagert ist. Dadurch werden praktisch alle Flüssigkeitsteilchen am Rührwerk vorbeigeschwemmt, so daß die geforderte gute Durchmischung erfolgt.

Bei einer Ausführungsform, bei der die Rührvorrichtung sowohl am oberen als auch am unteren Ende Rührer mit propellerartige Förderelemente bildenden Rührflügeln 13, 13 a ausgebildet ist, ist es vorteilhaft, wenn die Förderrichtung umkehrbar ist. Dies läßt sich z. B. durch Änderung der Drehrichtung erreichen. Damit ist eine Anpassung an die jeweiligen Verhältnisse möglich. Bildet sich vorwiegend eine stärkere Sinkschicht 9 aus, so ist es zweckmäßig, die Rührer mit einer Förderrichtung nach oben (Pf 1) laufen zu lassen, während bei insbesondere stärkerer Ausbildung einer Schwimmdecke die Förderrichtung umgekehrt und damit die Schwimmdecke nach unten gefördert wird. Erwähnt sei noch, daß auch ein wechselweiser Betrieb mit Förderrichtungsumkehr für eine gute Durchmischung der Gülle vorteilhaft sein kann.

Fig. 5 zeigt eine abgewandelte Ausführungsform, bei der am unteren Ende der Rührer 6 als propellerartiges Förderelement mit Förderrichtung nach oben gemäß dem Pfeil Pf 5 ausgebildet ist. Im Bereich des Schwimmers 11 sind bei dieser Ausführungsform Wirbler bzw. Zerreißer 29 zum Aufwirbeln der Schwimmschicht angeordnet. Diese sind wie der Rührer 5 in den vorbeschriebenen Beispielen mit dem Schwimmer 11 verbunden, so daß sie immer im Bereich der Schwimmdecke in einem vorgebbaren Bereich arbeiten. Gegebenenfalls kann im oberen Bereich auch in Kombination mit den Zerreißern 29 ein als propellerartiges Förderelement ausgebildeter Rührer mit Rührflügeln 13 angeordnet sein.

In Fig. 5 ist noch gut erkennbar, daß an den inneren Enden der hier schräggestellten Rührflügel 13 a Befestigungsflansche 15 vorgesehen sind, die an entsprechende, mit der Rührstange 4 verbundene Anschlußflansche 28 a anschraubbar sind. Dadurch sind die Rührflügel 13 a auch gut insbesondere bei Beschädigung auswechselbar. Bei der Flanschverbindung sind hier Langlöcher 30 vorgesehen, durch die der Anstellwinkel der Rührflügel 13 a in Anpassung z. B. an eine gewünschte Fördermenge und auch in Anpassung an die Drehzahl der Rührvorrichtung verstellt werden kann.

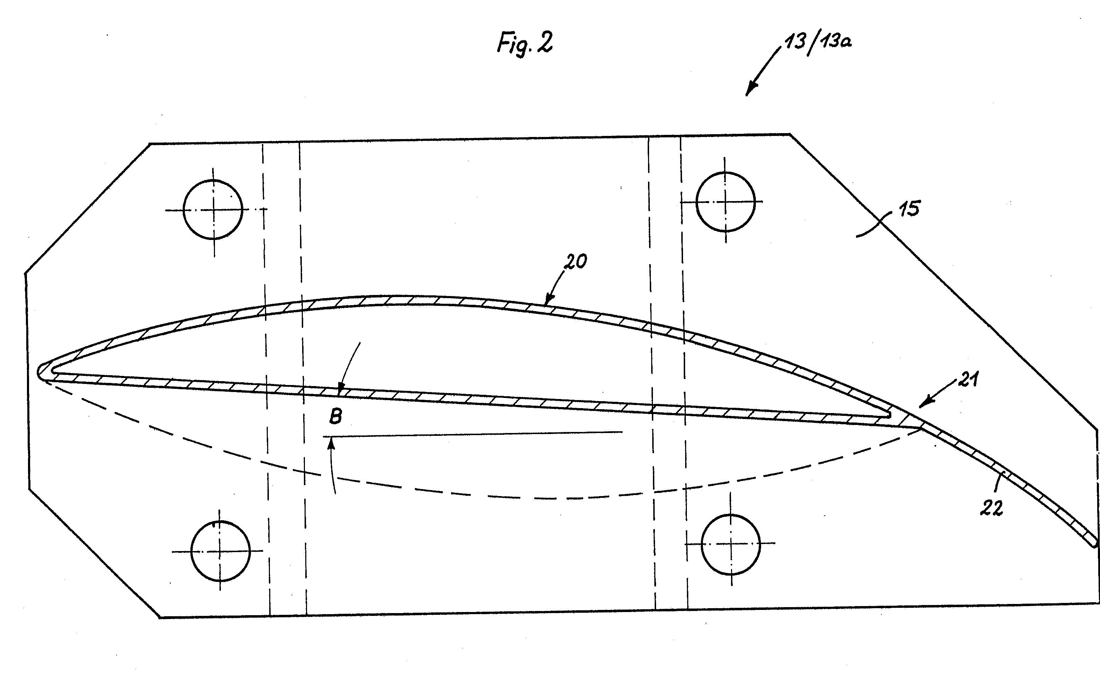

Erwähnt sei, daß die Verstellbarkeit des Anstellwinkels gegebenenfalls auch über die Null-Stellung hinaus vorgesehen sein kann, so daß eine entsprechende Förderrichtungsumkehr ohne Änderung der Drehrichtung der Rührstange 4 erzielbar ist. Für diesen Fall ist es in Abänderung zu Fig. 5 vorgesehen, daß die Rührflügel 13 a eine symmetrische Profilierung haben. Im Ausführungsbeispiel ist eine halbsymmetrische Ausbildung vorgesehen, die insbesondere wegen einer günstigen Herstellbarkeit oberseitig etwa kreisabschnittförmig und unterseitig eben ausgebildet ist. Durch diese tragflächenartige Profilierung kommt man bei hoher Förderleistung mit vergleichsweise geringer Antriebsleistung aus. Der Anströmwinkel B (vgl. Fig. 2) kann etwa 2 bis 12$^{\text{o}}$, vorzugsweise etwa 4$^{\text{o}}$ betragen.

Bei der halbsymmetrischen Profilierung, wie in Fig. 2 und 5 erkennbar, weist die Oberseite 20 bei der Hinterkante 21 des Rührflügels 13, 13 a eine Profilverlängerung 22 auf, die eine besonders gute Förderleistung der Rührer begünstigt.

Bei den in Fig. 5 gezeigten Rührflügeln 13 a, die eine vergleichsweise große Spannweite haben, ist noch erkennbar, daß zur Erhöhung der Stabilität im Nabenbereich eine Wurzelverstärkung 31 vorgesehen ist. Die Flügel 13 a sind vorzugsweise hohl und an den Enden offen ausgebildet, damit der Innenraum insbesondere beim Verzinken u. dgl. zugänglich ist. Des weiteren zeigt Fig. 5, daß die Rührflügel 13 a eine Schränkung mit zum äußeren Ende hin sich vorzugsweise verkleinerndem Anstellwinkel aufweisen. Auch dadurch werden besonders günstige Strömungsverhältnisse mit erhöhter zentraler Förderleistung begünstigt.

An ihrem inneren Ende weisen die Rührflügel 13, 13 a Befestigungsflansche 15 auf, die eine einfache Befestigungsmöglichkeit der Rührflügel 13, 13 a entweder an der Schwimmer-Nabe 12 bzw. an der festen Nabe 16 des unteren Rührers 6 ermöglichen. Wie bereits vorerwähnt, lassen sich die Rührflügel dadurch auch bedarfsweise gut auswechseln.

Fig. 1 und 3 lassen gut erkennen, daß die Rührstange 4 bodenseitig in einem Fußlager 17 und am oberen Ende bei dem Antriebsmotor 3 bzw. dem Getriebe 19 gelagert sind. Im Bereich des Motors erkennt man noch eine Wandhalterung 18, die im wesentlichen einen Wandbefestigungsbügel 33, drei z. B. gelenkig miteinander verbundene Haltestangen 34 sowie eine Befestigungsplatte 32 aufweist. Durch diese Konstruktion werden Eigenbewegungen der Rührvorrichtung 1, z. B. Schwingbewegungen der gesamten Vorrichtung etwas gedämpft auf die Behälterwand 10 übertragen, so daß die Belastung dieser Wand reduziert ist. Die Rührvorrichtung 1 arbeitet insgesamt als Langsamläufer z. B. mit einer Drehzahl von 30 Umdrehungen pro Minute.

Eine abgewandelte Betriebsweise der erfindungsgemäßen Rührvorrichtung kann noch darin bestehen, daß beide propellerartige, am oberen und unteren Endbereich der Rührstange 4 angeordneten Rührer 5 und 6 vorzugsweise bei gleicher Drehrichtung entgegengesetzte Anstellwinkel und somit aufeinander zugerichtete Förderrichtungen aufweisen. Dadurch erzielt man gleichzeitig eine Förderung der boden- bzw. oberflächenseitigen festeren Bestandteile in die mittlere Flüssigkeitsschicht und somit eine gute Durchmischung. Gegebenenfalls können die Förderungen der gegeneinander fördernden Rührer unterschiedlich sein, so daß neben der guten Durchmischung auch eine resultierende Durchströmungskomponente vorhanden ist.

/13

In Fig. 4 ist durch den schraubenlinienförmigen Pfeil Pf 6 angedeutet, daß durch die erfindungsgemäße Ausbildung bzw. Anordnung der Rührvorrichtung 1 neben der Umlaufströmung (Pfeil Pf 4) auch eine sich über die Füllhöhe erstreckende, rotierende Durchmischungsströmung vorhanden ist. Die bei Förderrichtungsumkehr sich einstellenden Strömungsverhältnisse sind durch die entsprechenden strichlinierten Pfeile gekennzeichnet. Die Behälterwand 10 bildet bei einer runden bzw. gerundeten Form eine Umlaufströmungsführung, durch die die Behälterfüllung kontinuierlich immer wieder der Rührvorrichtung 1 zugeführt wird. In Fig. 4 ist auch gut erkennbar, daß die Vorrichtung 1 seitlich versetzt in einem wandnäheren Bereich angeordnet ist. Dabei liegt die schrägverlaufende Rührstangen-Längsachse 35 in einer senkrechten Ebene, die etwa tangentenparallel bezüglich der benachbarten Behälterwand verläuft.

Gegebenenfalls können, insbesondere bei größeren Behältern auch mehrere, vorzugsweise in Umfangsrichtung gleichmäßig verteilte Vorrichtungen 1 angeordnet sein.

Bei eckigen Behältern, insbesondere rechteckigen bzw. quadratischen Behältern wird die erfindungsgemäße Rührvorrichtung 1 zentral in der Mitte, vorzugsweise etwa senkrecht stehend angeordnet. In Versuchen hat es sich gezeigt, daß bei dieser Anordnung auch die Eckbereiche gut erfaßt werden, so daß auch dort Ablagerungen vermieden werden.

Zumindest die mit der Flüssigkeit u. dgl. in Berührung kommenden Teile der Rührvorrichtung bestehen aus rostfreiem Material, vorzugsweise aus V2A-Stahl. Es können aber auch andere Materialien mit einer entsprechenden äußeren Schutzschicht verwendet werden. Erwähnt sei noch, daß auch der obere Rührer in seiner Höhenlage gegebenenfalls fest mit der Rührstange 4 verbunden sein kann, insbesondere dann, wenn für den Flüssigkeitsstand im Behälter eine Niveauregulierung zur Anpassung an die Höhenanordnung des oberen Rührers vorgesehen ist.

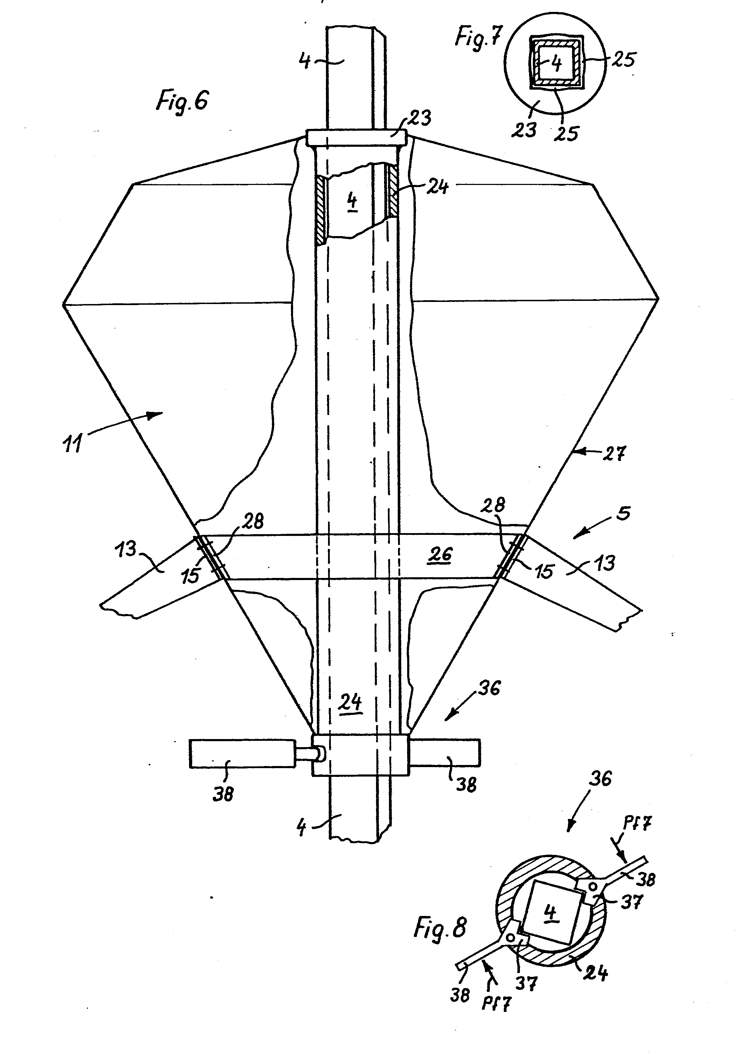

Die Figuren 6 und 8 zeigen noch eine vorteilhafte Ausgestaltung, durch die bei einem mit Rührflügeln 13 bestücktem Schwimmer 11 vermieden wird, daß dieser sich während des Betriebes in seiner Höhenlage, bedingt durch den Vortrieb der Rührflügel 13 verschiebt. Dazu ist bei dem Schwimmer, insbesondere an dessen unterem Ende eine Arretiervorrichtung 36 zum Festlegen des Schwimmers in axialer Richtung an der Rührstange 4 vorgesehen. Vorzugsweise weist dabei diese Arretiervorrichtung 36 zwei ein- und ausrückbare Klemmelemente 37 auf, die mit in die Flüssigkeit ragenden Paddeln 38 od. dgl. verbunden sind. Die Klemmelemente 37 sind am Schwimmer und dabei insbesondere an dessen Längsrohr 24 mit etwa parallelen Achsen zu diesem Rohr 24 verschwenkbar gelagert. Bei Stillstand der Rührvorrichtung 1 befinden sich die Klemmelemente 37 etwa in einer Neutralstellung bzw. sie beaufschlagen dann die Rührstange 4 nicht im Sinne einer Festlegung. Der Schwimmer kann sich somit in Anpassung an die jeweilige Füllhöhe in Längsrichtung der Rührstange 4 verschieben. Wird nun die Rührvorrichtung in Betrieb genommen, so legen sich die Klemmelemente 37 durch die dann erfolgende Strömungsbeaufschlagung Pf 7 der Paddel 38 an die Rührstange 4 an. Die Beaufschlagung ist dabei so vorgesehen bzw. eingestellt, daß gerade etwa die von den Rührflügeln 13 bewirkte Schubkomponente kein Verschieben des Schwimmers 11 bewirken kann. Falls zusätzliche Schubkomponenten auftreten, z. B. bei sich senkendem Flüssigkeitsspiegel durch das Eigengewicht des Schwimmers mit dem Rührer 5, so ist vorzugsweise vorgesehen, daß die Klemmkraft zum axialen Festlegen dann nicht mehr ausreicht und sich der Schwimmer trotzdem dem neuen Füllstand anpaßt. Die Klemm-

/15

0123790

elemente 37 greifen vorzugsweise an gegenüberliegenden Kanten der Rührstange 4 an und sind dabei so ausgebildet, daß sie für beide Drehrichtungen der Rührvorrichtung 1 ein axiales Festlegen des Schwimmers 11 an der Rührstange 4 bewirken. Die Arretiervorrichtung 36 ergibt auch eine etwa dynamisch wirkende, von der Drehzahl der Rührvorrichtung 1 abhängige selbständige Klemmung, wodurch sich automatisch auch eine Anpassung an den sich mit der Drehzahl ändernden Schub der Rührflügel 13 ergibt.

In den Ausführungsbeispielen sind die Rührer 5, 6 jeweils mit zwei gegenüberliegenden Rührflügeln 13, 13 a besetzt. Gegebenenfalls können auch mehr als zwei Rührflügel bei einem Rührer vorgesehen sein. In Abwandlung davon können auch Rührflügel über die axiale Länge der Rührstange 4 verteilt angeordnet sein, beispielsweise auf einer Schraubenlinie.

Insbesondere bei runden Güllen-Silos 2 könnte sich bei einer sehr weit am Außenrand angeordneten Rührvorrichtung eine wirbelförmige Umlaufströmung mit einem neutralen Zentrum einstellen, in dem sich Feststoffe ansammeln könnten. Für diesen Fall ist die Anordnung der Rührvorrichtung so vorgesehen, daß auch dieses neutrale Zentrum im Beaufschlagungsbereich des bzw. der Rührer liegt. Ein Konzentrieren von Schwimm- oder Sinkbestandteilen wird dadurch auch in diesem Falle vermieden.
Versuche haben gezeigt, daß die erfindungsgemäße Rührvorrichtung 1 bei Behältern mit einem Füllvolumen z. B. von 200 bis 2.000 cbm eingesetzt werden können. Der wesentliche Vorteil liegt dabei in der guten Durchmischung bei gleichzeitig geringer Antriebsleistung der Rührvorrichtung 1. Bei einer Rührvorrichtung mit Rührern von 5 m Durchmesser reicht beispielsweise eine Antriebsleistung von 5,5 kW aus.

Alle in der Beschreibung, den Ansprüchen und der Zeichnung dargestellten Merkmale können sowohl einzeln als auch in beliebiger Kombination miteinander erfindungswesentlich sein.

– Ansprüche –

**PATENTANWÄLTE**

**DIPL.-ING. H. SCHMITT**

**DIPL.-ING. W. MAUCHER**

78 FREIBURG I. BR.
DREIKÖNIGSTR. 13
TELEFON: (0761) 10733
70774

0123790

17

Firma
Schaffer + Moser AG
Maschinen- und Apparatebau
CH-6207 Nottwil

UNSERE AKTE · BITTE STETS ANGEBEN!

E 83 545 MR

Rührvorrichtung

Ansprüche

1. Rührvorrichtung zum Durchmischen von Flüssigkeiten mit Schwimm- und Sinkbestandteilen, insbesondere von in einem Behälter befindlicher Gülle od. dgl., mit einem Antriebsmotor sowie einer mit Rührern od. dgl. besetzten, in die Gülle od. dgl. ragenden Rührstangen od. dgl., d a d u r c h   g e k e n n - z e i c h n e t , daß in wenigstens zwei etwa übereinanderliegenden Ebenen Rührer (5, 6) od. dgl. an der Rührstange (4) angebracht sind und daß zumindest einer der Rührer eine bezüglich der Rührstange etwa axiale Förderrichtung aufweist.

2. Rührvorrichtung nach Anspruch 1, dadurch gekennzeichnet, daß sie mit ihrer Rührstange (4) schräg, vorzugsweise in einem Winkel (A) zur Senkrechten von bis zu etwa 45$^o$, vorzugsweise mit einem Schrägwinkel (A) von etwa 30$^o$ angeordnet ist, und daß eine durch die Längsachse der Vorrichtung laufende, senkrechte Ebene insbesondere etwa in Richtung einer gewünschten Strömung orientiert ist.

3. Vorrichtung nach Anspruch 1 oder 2, dadurch gekenn-

/18

zeichnet, daß der obere Rührer (5) od. dgl. in Arbeitsstellung etwa im Oberflächenbereich der Güllenfüllung od. dgl. angeordnet ist, vorzugsweise innerhalb der Schwimmdecke od. dgl. Oberflächenschicht.

4. Vorrichtung nach einem der Ansprüche 1 bis 3, dadurch gekennzeichnet, daß die Höhe des oberen Rührers (5) od. dgl. in Anpassung an den jeweiligen Füllstand des Güllen-Behälters (2) verstellbar ist und daß dazu vorzugsweise ein mit dem Rührer (2) od. dgl. verbundener, auf der Rührstange (4) drehfest und längsverschieblich angeordneter Schwimmer (11) vorgesehen ist.

5. Vorrichtung nach Anspruch 4, dadurch gekennzeichnet, daß als Schwimmkörper (11) eine längsverschieblich auf der Rührstange (4) gelagerte, hohle Nabe (12) od. dgl. für den oberen Rührer (5) od. dgl. vorgesehen ist, und daß zur drehfesten Verbindung die Rührstange (4) vorzugsweise durchgehend sowie die Nabe (12) bei ihrer Durchgangsöffnung für die Rührstange innenseitig einen profilierten, insbesondere mehrkantigen, z. B. vierkantigen Abschnitt aufweist.

6. Vorrichtung nach Anspruch 4 oder 5, dadurch gekennzeichnet, daß der Schwimmer (11) ein vertikales Rohr (24) mit einer runden Innenhöhlung sowie vorzugsweise in seinem oberen Bereich eine Mitnehmerscheibe (23) od. dgl. mit einer der Rührstange (4) od. dgl. entsprechend profilierten Durchgangsöffnung aufweist.

7. Vorrichtung nach einem der Ansprüche 4 bis 6, dadurch gekennzeichnet, daß quer zur etwa vertikalen Längserstreckung des Schwimmers innerhalb von diesem ein Querträger, vorzugsweise ein insbesondere von dem vertikalen Rohr (24) durchsetztes Vierkantrohr (26) angeordnet ist, das an seinen Enden im Mantelbereich des Schwimmers (11) Anschlußflansche (28) od. dgl. für Rührer od. dgl. trägt.

8. Vorrichtung nach einem der Ansprüche 4 bis 7, dadurch gekennzeichnet, daß der Innenraum des Schwimmers (11) ausgeschäumt und insbesondere durch eine Kunststoffschicht, insbesondere eine Polyesterschicht, Gfk-Schicht od. dgl. umgrenzt ist.

9. Vorrichtung nach einem der Ansprüche 1 bis 8, dadurch gekennzeichnet, daß zumindest der obere Rührer (5) mit seinen Rohrflügeln (13) eine etwa kegelförmige, bezüglich der Rührstange (4) nach unten weisende Rotationsmantelebene bildet, und mit einer Mantellinie vorzugsweise etwa parallel zur Flüssigkeitsoberfläche verläuft.

10. Vorrichtung nach einem der Ansprüche 1 bis 9, dadurch gekennzeichnet, daß der bzw. die Rührflügel (13, 13 a) eine tragflächenartige Profilierung, vorzugsweise eine halbsymmetrische, gegebenenfalls eine symmetrische Profilierung aufweisen und in Arbeitsstellung mit einem Anstellwinkel von etwa 2 bis 12$^{\circ}$, vorzugsweise von etwa 4$^{\circ}$ montiert sind.

11. Vorrichtung nach Anspruch 10, dadurch gekennzeichnet, daß an der Hinterkante (21) der insbesondere halbsymmetrischen Rührflügel (13, 13 a) vorzugsweise eine oberseitige Profilverlängerung (22) vorgesehen ist.

12. Vorrichtung nach einem der Ansprüche 1 bis 11, dadurch gekennzeichnet, daß die Rührflügel (13, 13 a) an ihren inneren Enden jeweils einen Befestigungsflansch (15) insbesondere zum Anschrauben an eine Rührstangen-seitige Nabe (12, 16) od. dgl. aufweisen.

13. Vorrichtung nach einem der Ansprüche 1 bis 12, dadurch gekennzeichnet, daß bodenseitig ein Fußlager (17) für die Rührstange (4) und am oberen Ende der Antriebsmotor, gegebenenfalls mit einem Getriebe (19) sowie mit einem zusätzlichen Lager angeordnet sind, und daß beim Bereich des Motors (3) od. dgl. eine vorzugsweise in sich etwas elastische, insbesondere verstellbare Wandhalterung (18) angreift.

14. Vorrichtung nach einem der Ansprüche 1 bis 13, dadurch gekennzeichnet, daß im unteren Bereich wenigstens ein Rührer (6) als propellerartiges Förderelement und der bzw. die oberen Rührer (5) als Wirbler bzw. Zerreißer (29) ausgebildet sind, und daß die Förderrichtung vorzugsweise etwa nach oben gerichtet ist.

15. Vorrichtung nach einem der Ansprüche 1 bis 14, dadurch gekennzeichnet, daß im oberen Bereich gegebenenfalls in Kombination mit einem oder mehreren Zerreißern (29) od. dgl. wenigstens ein Rührer als propellerartiges Förderelement ausgebildet ist.

16. Vorrichtung nach einem der Ansprüche 1 bis 15, dadurch gekennzeichnet, daß sich sowohl am oberen als auch am unteren Endbereich der Rührstange (4) od. dgl. als propellerartige Förderelemente ausgebildete Rührer befinden und daß vorzugsweise die Förderrichtung umkehrbar ist.

17. Vorrichtung nach einem der Ansprüche 1 bis 16, dadurch gekennzeichnet, daß die Rührflügel (13, 13 a) od. dgl. verstellbar an der Rührstange (4), dem Schwimmer (11) od. dgl. angebracht bzw. anbringbar sind und daß insbesondere der Strömungsanstellwinkel gegebenenfalls über eine Null-Stellung hinaus und/oder der Winkel zur Rührstange hin einstellbar sind.

18. Vorrichtung nach einem der Ansprüche 1 bis 17, dadurch gekennzeichnet, daß die Rührflügel (13, 13 a) eine Schränkung mit zum äußeren Ende hin sich vorzugsweise verkleinerndem Anstellwinkel aufweisen.

19. Vorrichtung nach einem der Ansprüche 1 bis 18, dadurch gekennzeichnet, daß die Behälterwand (10) eine Umlaufströmungsführung bildet und eine gerundete, vorzugsweise kreisrunde Form hat, und daß die Vorrichtung vorzugsweise im wandnahen Bereich mit einer etwa tangenten-parallelen Schrägstellung angeordnet ist.

20. Vorrichtung nach einem der Ansprüche 1 bis 19, dadurch gekennzeichnet, daß bei einem eckigen Behälter, insbesondere einem rechteckigen bzw. quadratischen Behälter die Vorrichtung zentral in der Mitte, vorzugsweise etwa senkrecht stehend angeordnet ist.

21. Vorrichtung nach einem der Ansprüche 1 bis 20, dadurch gekennzeichnet, daß insbesondere bei einem größeren Behälter mehrere, vorzugsweise in Umfangsrichtung gleichmäßig verteilte Vorrichtungen (1) angeordnet sind.

22. Vorrichtung nach einem der Ansprüche 1 bis 21, dadurch gekennzeichnet, daß bei dem Schwimmer (11), insbesondere bei Bestückung mit Rührflügeln (13, 13 a) eine Arretiervorrichtung (36) zum Festlegen des Schwimmers (11) in axialer Richtung der Rührstange (4) vorgesehen ist.

23. Vorrichtung nach Anspruch 22, dadurch gekennzeichnet, daß die Arretiervorrichtung (36) zur drehabhängigen Betätigung ein oder mehrere ein- und ausrückbare, an der Rührstange (4) angreifende Klemmelemente (37) aufweist, die mit in die Flüssigkeit ragenden Paddeln (38) od. dgl. verbunden sind.

24. Vorrichtung nach einem der Ansprüche 1 bis 23, dadurch gekennzeichnet, daß Rührer, insbesondere Rührflügel über die axiale Länge der Rührstange (4) verteilt angeordnet sind, beispielsweise auf einer Schraubenlinie verteilt.

25. Rührvorrichtung nach einem der Ansprüche 1 bis 24, dadurch gekennzeichnet, daß beide propellerartigen, am oberen und unteren Endbereich der Rührstange (4) angeordneten Rührer (5, 6) od. dgl., vorzugsweise bei gleicher Drehrichtung entgegengesetzten Anstellwinkel und aufeinander zugerichtete Förderrichtungen aufweisen, und daß gegebenenfalls die Fördermengen der gegeneinander fördernden Rührer od. dgl. unterschiedlich sind.

26. Rührvorrichtung nach einem der Ansprüche 1 bis 25, dadurch gekennzeichnet, daß sich der bodenseitige Rührer (6) in Arbeitsstellung etwa oberhalb einer Sinkschicht (9) befindet und dort fest mit der Rührstange (4) verbunden ist, und daß seine Rührflügel (13 a) vorzugsweise in einer Ebene angeordnet sind.

0123790

27. Vorrichtung nach einem der Ansprüche 1 bis 26, dadurch gekennzeichnet, daß zumindest die mit der Flüssigkeit od. dgl. in Berührung kommenden Teile der Rührvorrichtung aus rostfreiem Material, vorzugsweise aus V2A-Stahl bestehen.

28. Vorrichtung nach einem der Ansprüche 1 bis 27, dadurch gekennzeichnet, daß die Drehzahl der Rührer od. dgl. etwa 10 bis 60, vorzugsweise etwa 20 Umdrehungen pro Minute beträgt und daß der Antriebsmotor (3) vorzugsweise mit einem Getriebe (19) gekoppelt ist.

29. Vorrichtung nach einem der Ansprüche 1 bis 28, dadurch gekennzeichnet, daß eine Niveauregulierung für den Flüssigkeitsstand im Behälter (2) zur Anpassung an die Höhenanordnung des bzw. der oberen Rührer (5) od. dgl. vorgesehen ist.

- Zusammenfassung -

/24

Fig.1

Fig. 2

13/13a

Schaffer + Moser

Fig.4

Fig.3

Fig.5

Fig.6

Fig.7

Fig.8

4

23

24

4

25

23

25

11

27

28

28

13

15

26

15

13

24

36

38

38

4

36

Pf7

38

4

37

38

Pf7

37

24